# EUROPEAN PATENT APPLICATION

(11) **EP 2 063 617 A1**
(43) Date of publication of application: **27.05.2009**
(21) Application number: 06811296.0
(22) Date of filing: 05.10.2006
(51) Int. Cl.: H04M 3/00, H04L 12/56, H04Q 7/38

(54) **CALL CONNECTION PROCESSING METHOD AND MESSAGE TRANSMITTING AND RECEIVING PROXY DEVICE**

(71) Applicant: Fujitsu Limited, Kawasaki-shi, Kanagawa 211-8588 (JP)
(72) Inventor: MOTOHASHI, Kayo, Kawasaki-shi Kanagawa 211-8588 (JP); TEZUKA, Yasuo, Kawasaki-shi Kanagawa 211-8588 (JP); HASHIMOTO, Masanori, Kawasaki-shi Kanagawa 211-8588 (JP); MIYAZAKI, Nao, Kawasaki-shi Kanagawa 211-8588 (JP)
(74) Representative: Ward, James Norman
(86) International application number: PCT/JP2006/319958
(87) International publication number: WO 2008/044265

(57) **Abstract**

A call connection processing method that uses SIP (Signal Invitation Protocol) to perform call connection between user terminals and a backbone network via an access network is disclosed. In the method the user terminal instructs a proxy apparatus in the access network to send specified SIP signaling messages to the backbone network in place of the user terminal; by following that instruction, the proxy apparatus does not send a certain SIP message of the SIP signaling messages to the user terminal, or sends another SIP messages to the backbone network in place of the user terminal.

## Description

### TECHNICAL FIELD

The present invention relates to a call connection processing method and message transmission/reception proxy apparatus, and more particularly to a call connection processing method and message transmission/reception proxy apparatus that uses SIP protocol to perform a call connection between user terminals and a backbone network by way of an access network.

### BACKGROUND ART

From the aspect of ease of use and cost, systems have been constructed that use IP (Internet Protocol) and other related protocols as today's communication systems. Protocol groups that are on the basis of this IP protocol are applied not only to stationary communication systems but to mobile communication systems as well. Moreover, of that protocol group, SIP (Session Initiation Protocol) is becoming the standard protocol used for call control. In next-generation network systems, attempts are being made to build an integration systems that is based on IMS (IP Multimedia Subsystem) that uses this SIP protocol, such that all stationary communication networks and mobile communication networks are connected to this integration system.

### LTE/SAE System

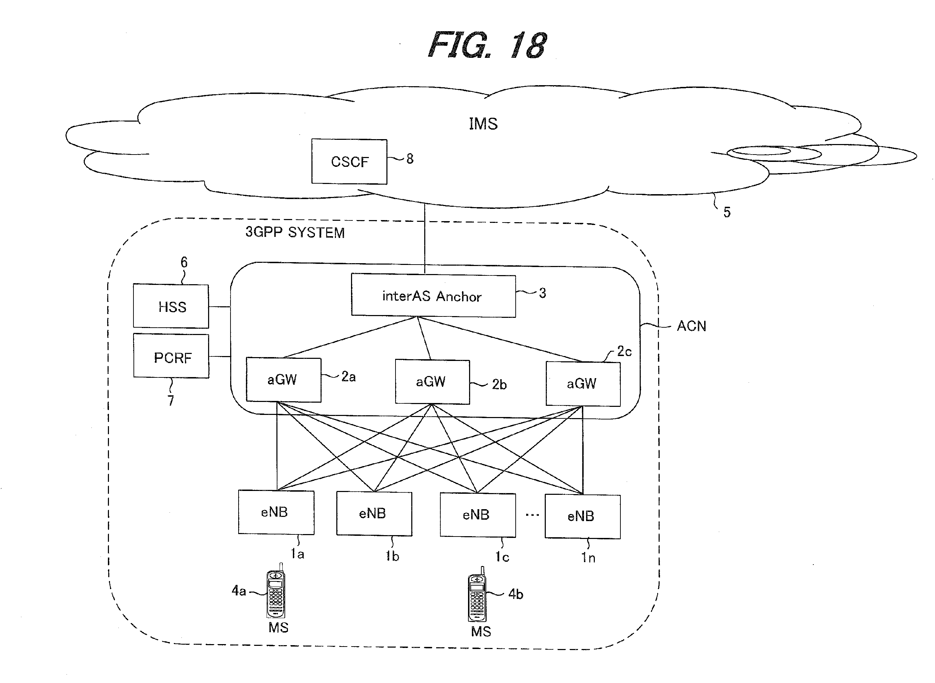

FIG. 18 illustrates an example of an Evolved 3GPP system, which is a next-generation system that is connected to an IMS (refer to 3GPP, TS24.228 v5.14.0). An Evolved 3GPP system comprises: base stations eNB (evolved-UTRAN NodeB) 1a to 1n; access gateways aGW (evolved-UTRAN Access Gateway) 2a to 2c that bundle and control the base stations; and IASA (Inter Access System Anchor) 3, which is an anchor for the overall network; where the aGW 2a to 2c and IASA 3 form an access network ACN for the IMS,
The base stations eNB 1a to In, comprise functions that are nearly the same as the functions of a conventional base station NB and Radio Network Controller (RNC). During call connection, a mobile terminal (Mobile Station) and eNB are connected by Radio Resource Control (RRC), and after that, that mobile terminal and aGW are connected by Attach and the aGW is notified of the unique terminal ID of that mobile terminal.
The aGW 2a to 2c control transmission/reception of messages between the mobile terminals 4a, 4b and the IMS 5, and together with the eNB 1a to 1n form a LTE-RAN (Radio Access Network). The IASA 3, having a router-like function, connects to the IMS 5, as well as connects to a HSS (Home Subscriber Server) 6, PCRF (Policy & Charging Rule Function) 7, and PCEF (Policy & Charging Enhance Function Unit). The HSS is a server that saves profiles of subscribers, the PCRF sets bearer conditions, and the PCRF decides a decided bearer to an aGW. After an RRC connection completes, the HSS verifies a user terminal via the IASA 3 and aGW 2a to 2c, and the aGW registers with the HSS 6 that it is in charge of that user's calls.
When there is a call from a mobile terminal after processing such as verification and registration is completed, the aGW 2a to 2c transmits SIP messages for controlling the call which is received from the user terminal via the eNB 1a to 1n, to a CSCF (Call Session Control Function) 8 of the IMS 5 via the IASA 3, and transmits SIP messages for controlling the call that is received from the CSCF 8 of the IMS 5 via the IASA 3 to the mobile terminal 4a, 4b via the eNB 1a to 1n. Moreover, after call connection is completed, the aGW 2a to 2c receives data from the mobile terminal via the eNB 1a to 1n and transmits that data to the router of the IMS 5, and transmits data received from the router of the IMS 5 to the user terminal 4a, 4b via the eNB 1a to 1n.

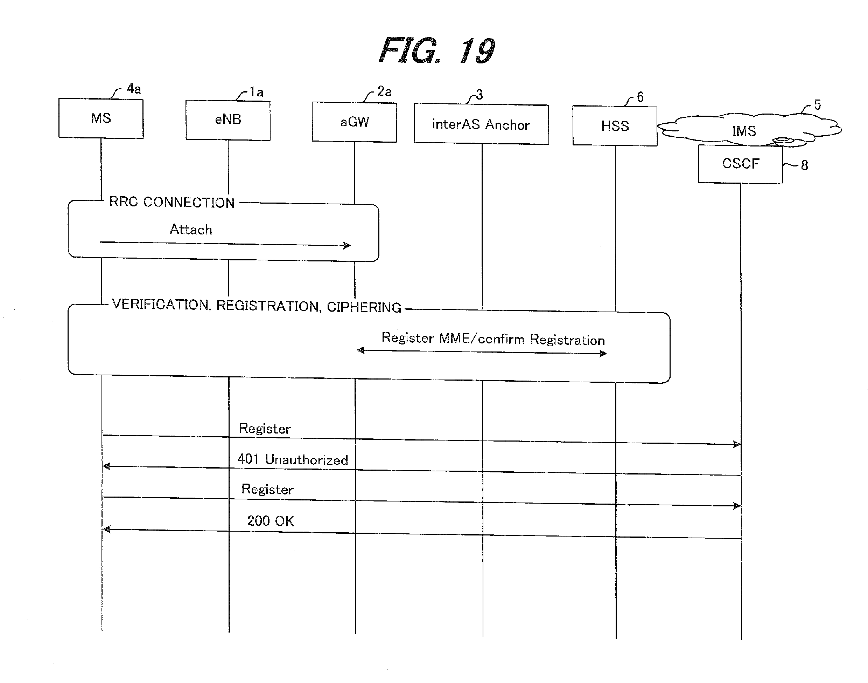

FIG. 19 is a drawing for explaining the procedure for registering a mobile terminal 4a, which is an IMS terminal, in the IMS 5 when that mobile terminal is purchased. When there is a request for registration, the mobile terminal and the eNB are connected by RRC (Radio Resource Control), and after that, the mobile terminal and the aGW are connected by Attach, and the aWG is notified of a unique number (ID number) for that mobile terminal. In addition, after RRC connection is completed, HSS 6 performs verification of the mobile terminal 4a via the IASA 3 and aGW 2a, and the aGW registers with the HSS 6 that it is in charge of the calls of the mobile terminal 4a (Register MME/Confirm Registration). MME is the abbreviation for Mobile Management Entity.
After the verification, registration and ciphering processing described above are completed, the mobile terminal 4a requests registration to the CSCF 8 of the IMS 5 in order to receive the IMS service (Register). Since the mobile terminal 4a is not registered, the CSCF 8 returns the message 401 Unauthorized. After this, the mobile terminal 4a attaches verification data and requests registration again (Register). The CSCF makes reference to that verification data and when it is proper, registers that mobile terminal 4a and sends a 200 OK message to the mobile terminal 4a indicating that it was registered. By doing this, the mobile terminal 4a can now receive the IMS service.

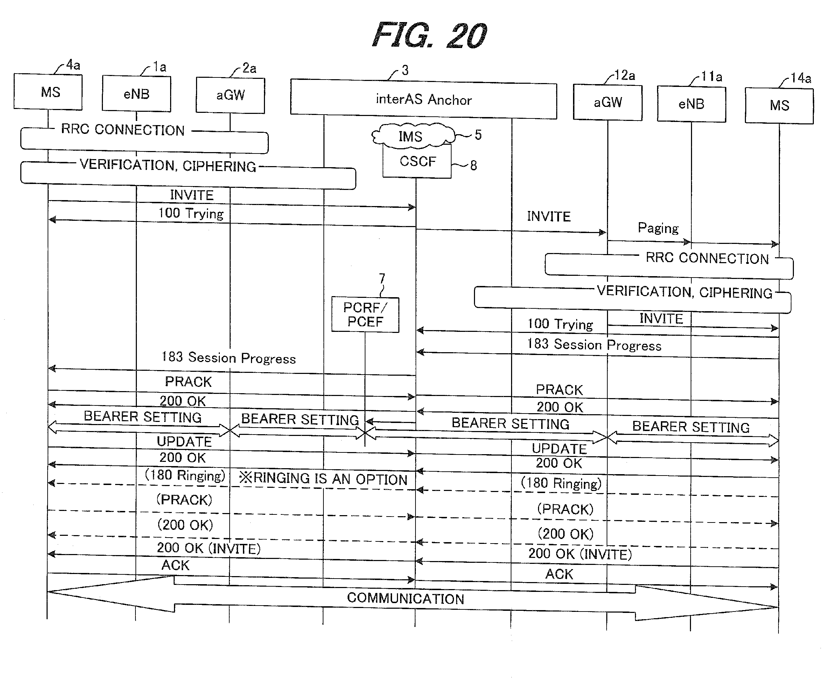

FIG. 20 is a drawing explaining the procedure by the IMS terminal to originate a call.
When a mobile terminal 4a originates a call, that mobile terminal is connected with an eNB 11a by RRC (Radio Resource Control), and after that, the mobile terminal and aGW are connected by Attach, and the aGW is notified of the unit number (ID number) of the mobi le terminal. After RCC connection is completed, the HSS 6 performs verification of the mobile terminal 4a via the IASA 3 and aGW 2a. When the verification process is completed, the mobile terminal 4a sends an INVITE message to the CSCF 8, and the CSCF 8 returns a '100 Trying' message indicating that the INVITE message was received. The INVITE message contains, the other party's telephone number, QoS information (for example, bi-direction communication of audio and video) desired by the mobile terminal 4a on the calling side, codec information, type of messages used, whether or not there is a confirmation response and the like. QoS is the abbreviation for Quality of Service.
After that, the CSCF 8 sends an INVITE message to the mobile terminal 14a on the signal terminating side, however when the mobile terminal and aGW are not connected, the aGW 12a performs paging all together). When the mobile terminal 14a on the called side answers this paging, RRC connection, verification and ciphering processing is performed similarly for the calling side, and when verification is completed, aGW 12a sends an INVITE message to the mobile terminal 14a. After receiving this INVITE message, the mobile terminal 14a returns a '100 Trying' message indicating that the INVITE message was received, and issues a '183 Session Progress' message that indicates the progress status of the session. The '183 Session Progress' message comprises: QoS information for the mobile terminal 14a on the cal led side (for example, bi-directional communication of audio and video), codec information, type of messages used, whether or not there is a confirmation response, and the like. After receiving the '183 Session Progress' message, the CSCF 8 sends the message to the mobile terminal 4a on the calling side, and after the mobile terminal 4a on the calling side receives the '183 Session Progress' message, it sends a confirmation response PRACK to the mobile terminal 14a on the called side via the CSCF 8. After receiving the PRACK response, the mobile terminal 14a on the called side notifies the mobile terminal 4a on the calling side of a 200 OK message via the CSCF 8.

After the processing described above has finished, the AF (Application Function) of the CSCF 8 makes reference to the QoS information in the INVITE message and 183 Session Progress message and the contract information for each mobile terminal, and transfers the information necessary for setting the bearer to the PCRF/PCEF 7, the PCRF/PCEF 7 performs the bearer setting between each of the aGW 2a on the calling side and the aGW 12a on the called side, and each aGW 2a, 12a performs the bearer setting between the mobile terminals 4a, 14a respectively.
When the mobile terminal 4a on the calling side is updated based on the bearer setting, it sends an UPDATE to the mobile terminal 14a on the called side via the CSCF 8. In a case where the mobile terminal 14a on the called side is also updated based on the bearer setting, it sends a 200 OK message to the mobile terminal 4a on the calling side via the CSCF 8 as well as sends a calling sound generation message (Ringing). After receiving the Ringing message, the mobile terminal 4a on the calling side sends a confirmation response PRACK to the mobile terminals 14a on the called side via the CSCF 8, and the mobile terminal 14a on the called side sends a 200 OK message to the mobile terminal 4a on the calling side indicating that it received the PRACK.
In this state, when the user of the mobile terminal 14a on the called side lifts up the receiver (Off Hook), for example, the mobile terminal 14a on the called side sends a 200 OK (INVITE) to the mobile terminal 4a on the calling side via the CSCF 8, and the mobile terminal 4a on the calling side returns an ACK after reception of the 200 OK (INVITE) to the mobile terminal 14a on the called side, and by doing so, communication becomes possible between both mobile terminals 4a, 14a.

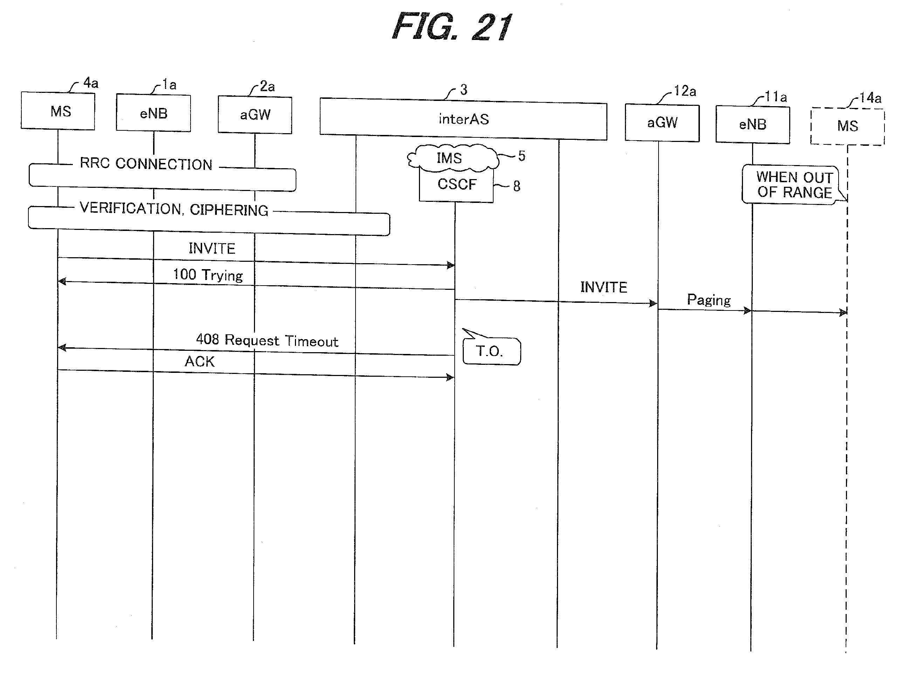

FIG. 21 illustrates the sequence in the case when the mobile terminal 14a on the called side is out of range and there is no response even though the aGW 12a performs paging; where the CSCF 8 monitors the time that elapses after the INVITE is sent to the aGW 12a, and when a timeout occurs because no 100 Trying message is returned even though the elapsed time is greater than a set time, using a 408 Request Timeout message, the CSCF 8 notifies the mobile terminal 4a on the calling side that there is no response from the mobile terminal 14a on the called side, so the mobile terminal 4a on the calling side sends an ACK to the CSCF 8 and ends processing.

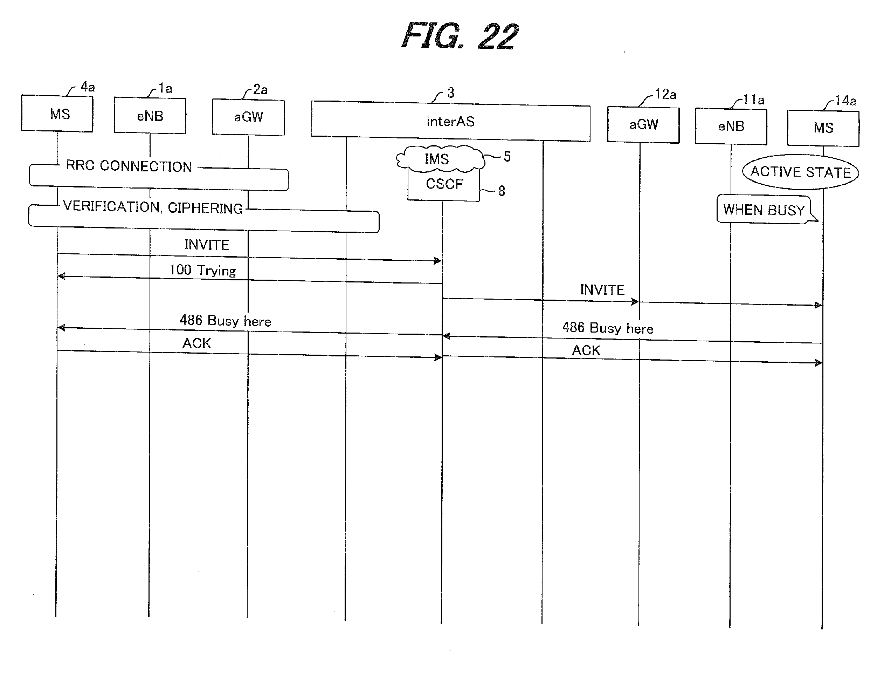

FIG. 22 illustrates the sequence in the case when the mobile terminal 14a on the called side is in a 'Busy' state; where the mobile station 14a on the called side returns a 486 Busy Here message if it is in a busy state when an INVITE is received from the CSCF 8. Thereby, the CSCF 8 sends the 486 Busy Here message to the mobile terminal 4a on the calling side to give notification that the mobile terminal 14a on the called side is busy, and the mobile terminal 4a on the calling side sends an ACK to the CSCF 8 and ends processing.

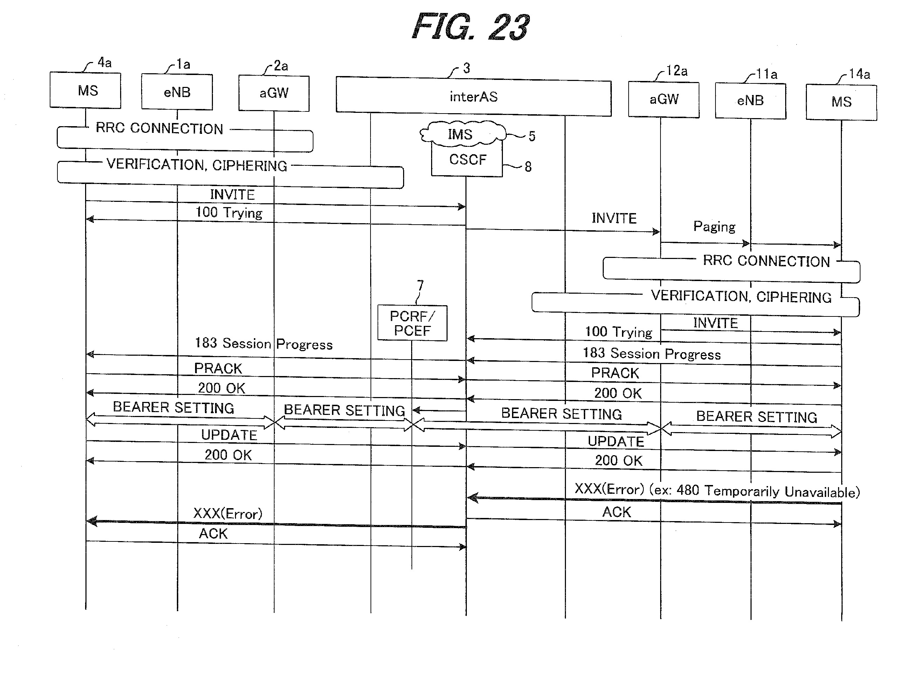

FIG. 23 illustrates the sequence in the case when an error occurred during the call connection procedure of the process. When some error occurs after the mobile terminal 14a on the called side generates a 200 OK message in response to receiving an UPDATE, the mobile terminal 14a sends the error message 480 Temporarily Unavailable to the mobile terminal 4a on the calling side via the CSCF 8, and the mobile terminal 4a on the calling side sends an ACK to the CSCF 8 then ends processing.

In a mobile communication system, radio communication is performed between the base station and mobile terminals, however, when compared with wired communication, the data communication speed in radio communication is generally inferior. In order to perform high-speed communication, it is necessary that many frequency bands are used for radio communication, however, the resources for radio communication are limited, and when many frequency bands are used, the number of calls (number of links) that can be made at the same time decreases accordingly. Therefore, it is necessary to reduce the number of times of signaling (number of transmitted messages) in radio communication zones, and particularly, this is desired in a public radio communication system such as that for mobile telephones. However, as is explained in FIG. 20 to FIG. 23, in current systems a large amount of signaling is requi red. In the example illustrated in FIG. 20, signaling is required 12 times or it is times in the radio communication zone.
Moreover, in an Evolved 3GPP system, it is desired that during call connection, the time (call connection time) from when a call is originated until communication begins be reduced. When a lot of SIP messages flow between end to end, the call connection time becomes long, and thus the wait time until communication begins becomes long and those calls occupy the respective frequency bands for long time, resulting in use of many of the radio communication resources.
A signaling method that uses the SIP protocol has been proposed. In the first related art (refer to Japanese translation of PCT international application No. 2006-506012A) disclosed is a system that uses SIP protocol to provide an IMS service and the system attempts to set a session between a calling terminal and called terminal and prevents erroneous billing by not billing when the attempt to set the session fails.
In the second related art (refer to Japanese patent publication number 2005-64646A) the transfer of signaling is made possible without taking redundant paths to a terminal even though the terminal has moved outside of the subnet from which it acquired address.

The object of the related art described above is not to reduce the amount of signaling in the radio communication zone during call connection, and neither is to shorten the call connection time.
Taking into consideration the problems described above, the object of the present invention is to reduce the amount of signaling in the radio communication zone during call connection.
Another object of the present invention is to shorten the time for the call connection performed before beginning communication.

### DISCLOSURE OF THE INVENTION

A first form of the present invention is a call connection processing method that uses SIP protocol to perform call connection between user terminals and a backbone network via an access network, comprising: a first step of instructing a proxy apparatus in the access network from a user terminal to send specified SIP signaling messages to the backbone network in place of the user terminal; a second step of following the instruction and not sending a certain SIP signaling message of the specified SIP signaling messages to the user terminal from the proxy apparatus during call connection, or sending another SIP signaling message to the backbone network from the proxy apparatus in place of the user terminal; and a third step of transmitting and receiving messages other than the specified SIP signaling messages between the user terminal and backbone network.
The instruction of the first step is performed by declaring using an INVITE message of the SIP protocol that said user terminal (1) does not request a reliability response, and (2) does not specify preconditions for bearer setting; and in the second step, the proxy apparatus performs in place of user terminal, transmission and reception of SIP signaling messages related to the reliability response, and transmission and reception of specified SIP messages after the bearer setting.
The call connection processing method described above further comprises a step of notifying a user terminal that the proxy apparatus will perform transmission of specified SIP signaling messages in place of the user terminal when there was no instruction from the user terminal to perform transmission and reception of specified SIP signaling messages in place of the user terminal; and a step of performing the transmission and reception of the specified SIP signaling messages in place of the user terminal.
The call connection processing method described above further comprising a step of independently proceeding on the calling side with the call connection processing sequence after a user terminal on the calling side sends an INVITE message of the SIP protocol until just before a user terminal on the called side responds with a 200 OK to the INVITE message, regardless of the connection status to the network of the user terminal on the cal led side; and a step of performing communication between the user terminal on the calling side and the user terminal on the called side via the backbone network after the user terminal on the calling side receives the 200 OK massage from the user terminal on the called side.
A second form of the present invention is a message transmission/reception proxy apparatus that is located in an access network configured to access a backbone network performs a call connection process between user terminals using SIP protocol, and that acts as a proxy for a user terminal during call connection to perform transmission/reception of SIP signaling messages with the backbone network, comprising: a user information storage unit that acquires and stores performance information and subscriber information of user terminals; a processing unit that performs a process of receiving and analyzing SIP signaling messages, a bearer setting process that uses the stored information, a relay process of relaying SIP signaling messages from and to a mobile terminal and base station, and a process of creating and sending SIP signaling messages in place of the mobile terminal; a transmission/reception unit that performs transmission of messages with the user terminal; and a transmission/reception unit that performs transmission and reception of messages with the backbone network.

### BRIEF DESCRIPTION OF THE DRAWINGS

FIG. 1 is a drawing for explaining the theory of the present invention.
FIG. 2 is a drawing showing the construction of a communication system to which the present invention can be applied.
FIG. 3 is a flowchart of the process for deciding which sequence process to execute according to whether or not SIP is mounted in the IMS terminal.
FIG. 4 is a drawing for explaining the procedure for registering an IMS terminal, which is mounted with SIP that has been improved for Evolved 3GPP, in the IMS after purchase.
FIG. 5 is a drawing for explaining the call connection sequence (first embodiment) in a case where an IMS terminal, which is mounted wi th SIP that has been improved for Evolved 3GPP, originates a call.
FIG. 6 is a drawing for explaining a variation of the call connection sequence of the first embodiment.
FIG. 7 is a drawing showing another call connection sequence (second embodiment) in a case where an IMS terminal, which is mounted with SIP that has been improved for Evolved 3GPP, originates a call.
FIG. 8 is a drawing for explaining a variation of the call connection sequence of the second embodiment.
FIG. 9 is a drawing for explaining the call connection sequence (first embodiment) in a case where a normal IMS terminal, which is not mounted with SIP that has been improved for Evolved 3GPP, originates a call.
FIG. 10 is a drawing for explaining a variation of the call connection sequence of the first embodiment (Fig. 9).
FIG. 11 is a drawing showing another call connection sequence (second embodiment) in a case where a normal IMS terminal originates a call.
FIG. 12 is a drawing for explaining a variation of the call connection sequence of the second embodiment (Fig. 12).
FIG. 13 is a drawing showing the call connection sequence (out of range) for an IMS terminal that is mounted with SIP that has been improved for Evolved 3GPP.
FIG. 14 is a drawing showing another call connection sequence (out of range) for an IMS terminal that is mounted wi th SIP that has been improved for Evolved 3GPP.
FIG. 15 is a drawing showing the call connection sequence (busy state) for an IMS terminal that is mounted with SIP that has been improved for Evolved 3GPP.
FIG. 16 is a drawing showing another call connection sequence (busy state) for an IMS terminal that is mounted with SIP that has been improved for Evolved 3GPP.
FIG. 17 is a drawing showing the processing sequence in a case where an Error message XXX (error) is generated and an error occurs before a normal response 200 OK massage is generated for an INVITE message.
FIG. 18 is a drawing showing an example of the construction of an Evolved 3GPP system, which is a next-generation network system, that is connected to an IMS.
FIG. 19 is a drawing for explaining the procedure for registering a mobile terminal in the IMS after purchasing the mobile terminal, which is an IMS terminal.
FIG. 20 is a drawing for explaining the procedure performed by an IMS terminal to originate a call.
FIG. 21 is a drawing showing the sequence in a case where a terminal on the terminating side is out of range and there is no response even though the aGW performs paging all together.
FIG. 22 is a drawing showing the sequence in a case where the terminal on the terminating side is in a busy state.
FIG. 23 is a drawing showing the sequence in a case where an error occurred during the call connection procedure of the process.

### BEST MODE FOR CARRYING OUT THE INVENTION

### (A) Theory of the Present Invention

By reducing the number of SIP protocol messages between mobile terminals and the IMS, the present invention reduces the amount of data in a radio communication zone and reduces the amount of time the frequency bands are occupied. Moreover, an intermediate node performs the connection process before calling the mobile terminal on the called side, and the present invention reduces the number of nodes that messages pass, and by doing so it is capable of shortening the call connection time.
The IMS (backbone network) side is set so that unless SIP messages that are decided according to specification are not transmitted, call control cannot be performed. Therefore, it is not possible to reduce the number of messages that arrive at the IMS or to reduce the number of messages that are sent from the IMS. However, in the present invention, the transmission and reception of some of the SIP messages that were originally transmitted between the IMS and a mobile terminal UE (User Equipment) are performed in behalf of the mobile terminal by an intermediate node (referred to as proxy apparatus) which exists between the IMS and base station eNB that perform radio communication. This makes it possible to keep the SIP messages that are sent to a mobile terminal and that are received from a mobile terminal to the necessary minimum, and thus makes it possible to reduce the number of messages in the radio communication zone. A proxy apparatus can be a base station eNB, however in the embodiments, the aGW functions as a proxy apparatus.

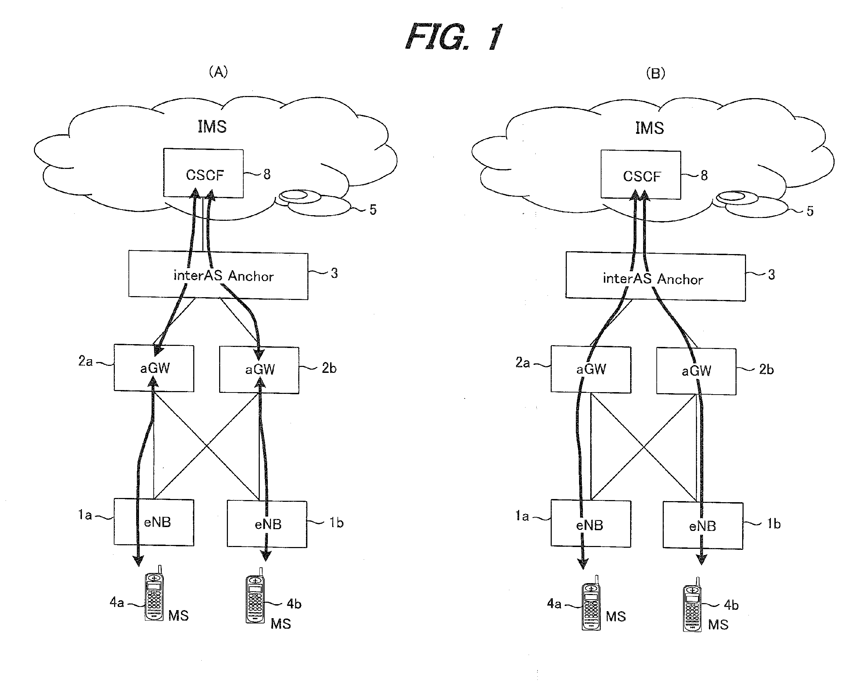

FIG. 1 is a drawing for explaining the theory of the present invention, where (A) of FIG. 1 illustrates the flow of SIP messages in the present invention, and (B) of FIG. 1 illustrates the flow of conventional SIP messages. In (A) of FIG. 1, the proxy apparatuses aGW2a, 2b perform the transmission/reception of part of the SIP messages that are originally transmitted between the CSCF 8 of the IMS 5, which is the backbone network, and the mobile terminals 4a, 4b in place of the mobile terminals. Moreover, the aGW 2a, 2b send just the necessary minimum number of SIP messages in the SIP massages received from the CSCF 8 to the mobile terminals 4a, 4b, and receives just the necessary minimum number of SIP messages from those mobile terminals and sends them to the CSCF 8. As a result, it is possible to reduce the number of messages in the radio communication zone. In the conventional method illustrated in (B) of FIG. 1, all of the SIP messages are transmitted between the CSCF 8 and the mobile terminals 4a, 4b via the aGW 2a, 2b, so there is a very large number of messages in the radio communication zone.
Furthermore, construction is such that part of the transmission of SIP messages that were originally transmitted between the CSCF 8 and mobile terminal on the called side can be performed by an aGW on the called side (not illustrated in the figure). In this way, it is possible to proceed with the call connection sequence on the calling side while connection is being performed between the aGW on the called side and a mobile terminal on the called side, and thus it is possible to shorten the call connection time.

### (B) System Configuration

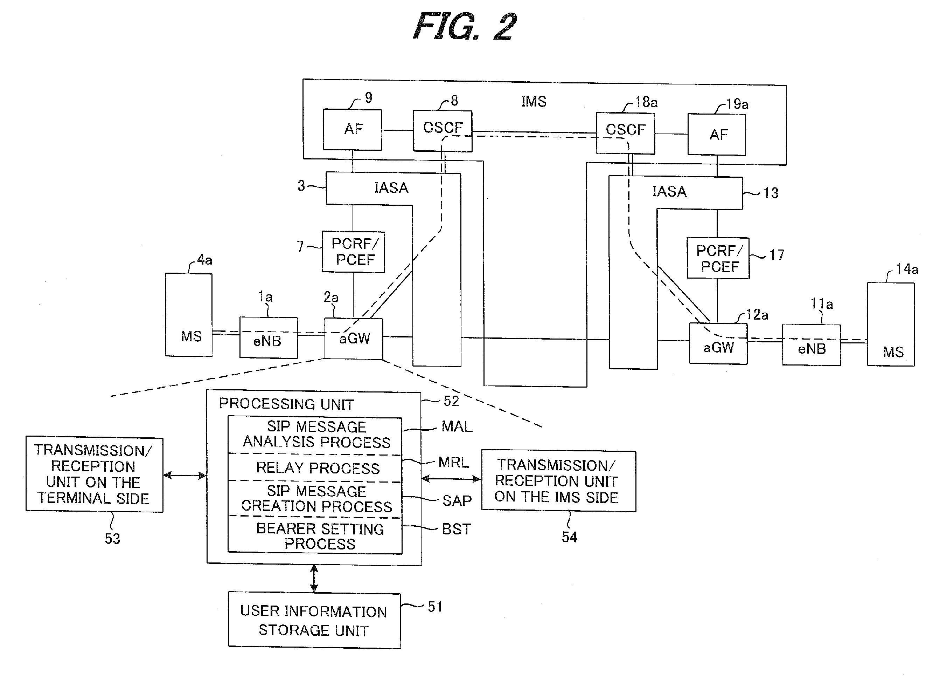

FIG. 2 is a drawing showing the construction of a communication system to which the present invention can be applied, where the left side of the IMS 5, which is the backbone network, is an Evolved 3GPP system on the calling side, and comprises a base station 1a, aGW 2a, IASA 3, mobile terminal 4a, and PCRF/PCEF 7. The right side of the IMS 5 is an Evolved 3GPP system on the called side, and comprises a base station 11a, aGW 12a, IASA 13, mobile terminal 14a and PCRF/PCEF 17.
The IMS 5 comprises a CSCF 8 and AF (Application Function) 9 on the calling side for performing the call connection sequence, and comprises a CSCF 18a and AF 19a on the called side. During call connection, the CSCF performs a call connection sequence process that will be described later, and the AF analyzes information that is necessary for the bearer setting that is provided from the CSCF, and gives instruction to the PCRF/PCEF to perform the bearer setting. After the call connection is complete, the IMS 5 transmits data between the calling side and called side via a router (not illustrated in the figure).
The aGW 2a on the calling side comprises: a user information storage unit 51 that acquires and stores terminal information and subscriber information for each of the mobile terminals; a processing unit 52 that performs a process MAL of receiving and analyzing SIP signaling messages, a bearer setting process BST that uses the stored information, a relay process MRL that relays SIP signaling messages from and to the mobile station and base station, and a process SAP of creating and sending SIP signaling messages in place of the mobile terminal; a transmission/reception unit 53 that performs transmission and reception of messages with the mobile terminal; and transmission/reception unit 54 that performs transmission and reception of messages with the backbone network side. The aGW 12a on the called side has similar construction.

### (C) Call Connection Sequence

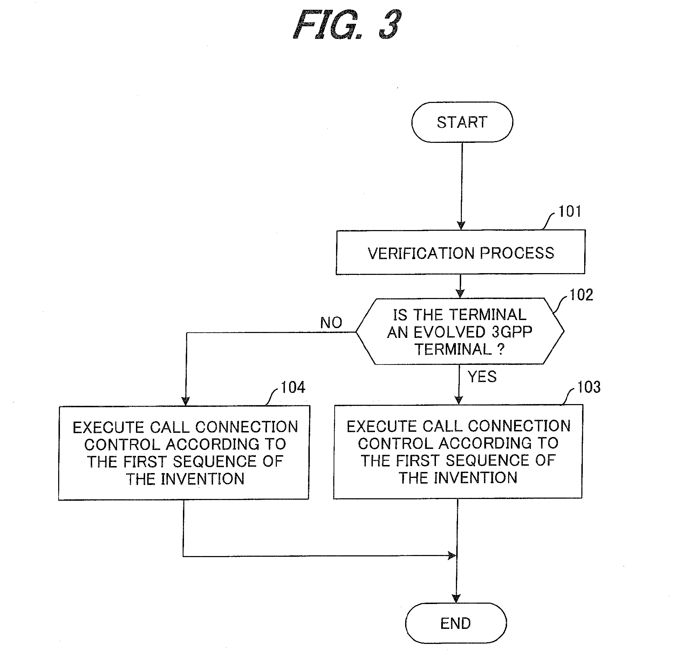

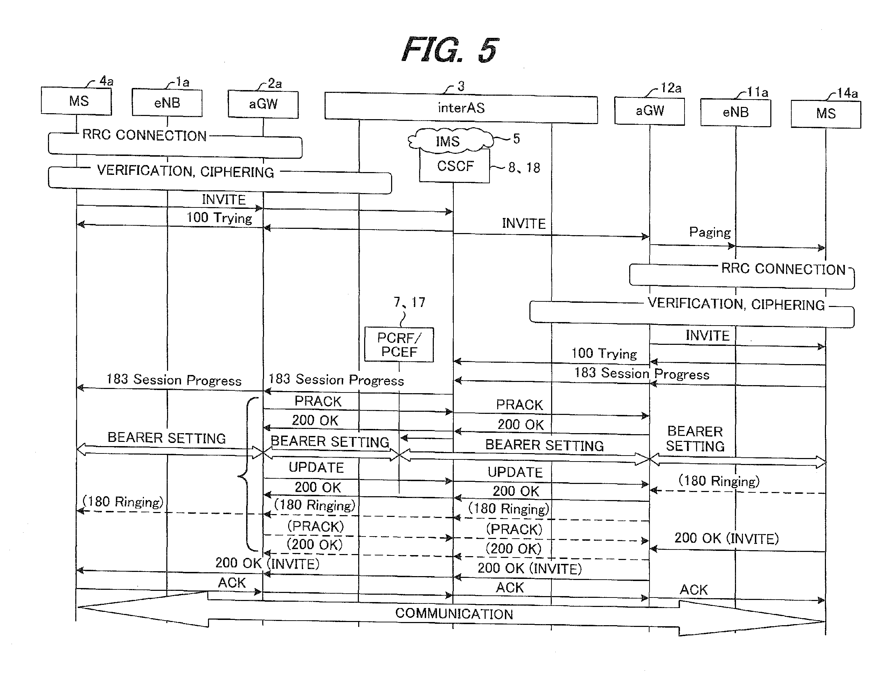

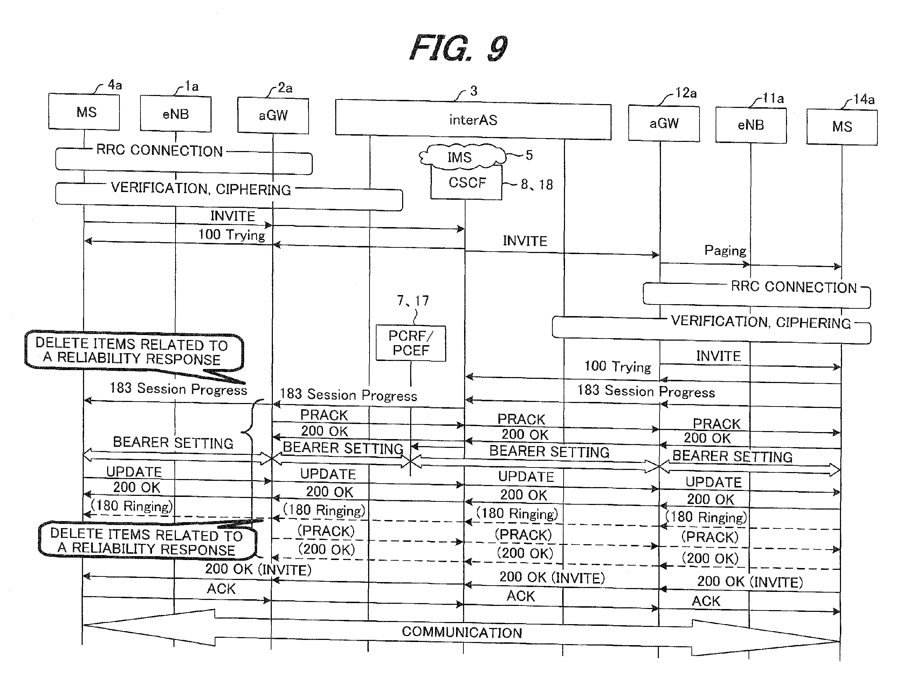

As the IMS terminals, there are IMS terminals that are mounted with SIP that has been improved for Evolved 3GPP, and IMS terminals that are not mounted with that improved SIP, where the respective call connection sequence processing is different for each. FIG. 3 is a flowchart of the process for deciding which sequence process to be executed according to whether or not SIP is mounted in the IMS terminal.
In the verification process that is performed at the start of call connection (step 101), the aGW 2a determines whether the mobile terminal is an IMS terminal that is mounted with improved SIP for Evolved 3GPP (step 102), and when it is (YES), executes a first sequence process (for example the sequence process illustrated in FIG. 5) (step 103), and when the mobile terminal is not an IMS terminal that is mounted with improved SIP for Evolved 3GPP (NO), executes a second sequence process (for example the sequence process illustrated in FIG. 9) (step 104).

### (C-1) Sequence for an IMS Terminal Mounted Wi th SIP Improved SIP for Evolved 3GPP

### (a) Registration Sequence

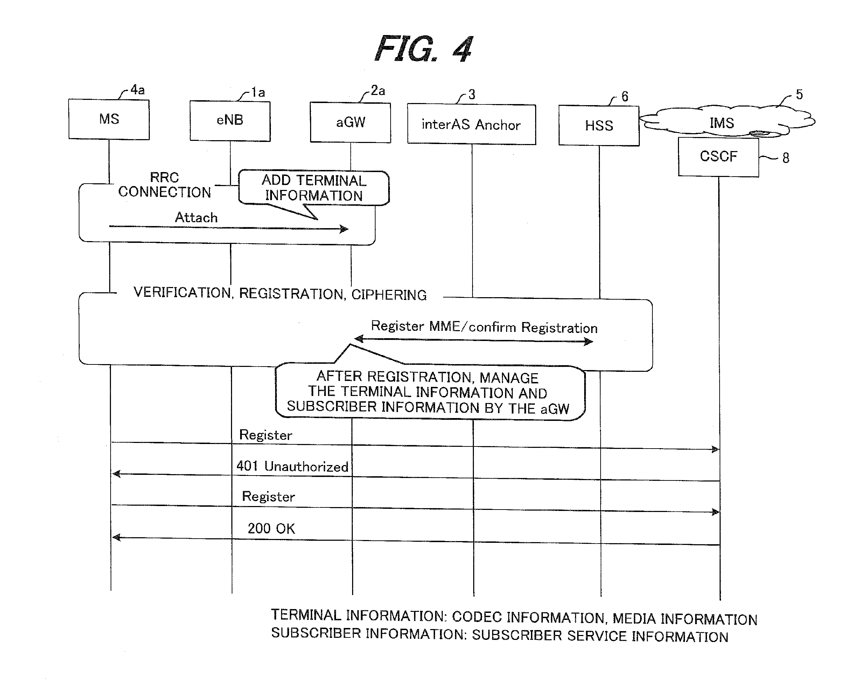

FIG. 4 is a drawing for explaining the procedure for registering the IMS terminal 4a, which is mounted with SIP that has been improved for Evolved 3GPP, in the IMS 5 after purchase. When there is a request for registration, the mobile terminal 4a and eNB 1a are connected by RRC (Radio Resource Control), then after that, the mobile terminal 4a and aGW 2a are connected by Attach and the aGW 2a is notified of the unique number (terminal ID) and performance information (media information, codec information) for that mobile terminal 4a. The media information is information about media that can be handled by the mobile terminal; for example, it indicates whether the mobile terminal can handle just audio information, or whether the mobile terminal can handle both audio information and video information. The codec information indicates the method for encoding audio and video information.
After RRC connection is complete, the HSS 6 performs verification of the mobile terminal 4a via the IASA 3 and aGW 2a, and the aGW 2a registers wi th the HSS 6 that aGW 2a is in charge of the mobile terminal 4a. Moreover, in addition to the terminal information (media information, codec information) that the aGW 2a was notified of, the aGW 2a stores subscriber information (for example, subscriber service information) that was acquired from the HSS 6 in connection with the mobile terminal. By doing so, the aGW 2a is able to identify the QoS that is supposed to be set for the mobile terminal on the calling side during call connection.
After the verification, registration and ciphering processing described above is finished, in order to receive the IMS service, the mobile terminal 4a requests to be registered in the CSCF 8 of the IMS 5 (Register). Since the mobile terminal 4a is unregistered, the CSCF 8 returns a 401 Unauthorized message. The mobile terminal 4a then attaches verification data and requests for registration again (Register). The CSCF 8 make reference to that verification information, and if it is proper, registers that mobile terminal 4a and sends a 200 OK message to the mobile terminal 4a indicating that it was registered. From this, the mobile terminal 4a can now receive the IMS service.

### (b) First Embodiment of a Call Connection Service

FIG. 5 is a drawing for explaining the call connection sequence (first embodiment) in a case where an IMS terminal, which is mounted wi th SIP that has been improved for Evolved 3GPP, originates a call.
When the mobile terminal 4a originates a call, the mobile terminal 4a and eNB 11a are connected by RRC, then after that, the mobile terminal 4 and aGW are connected by Attach and the aGW is notified of the unique number (terminal ID) of the mobile terminal. After the RRC connection is complete, the HSS 6 performs verification of the mobile terminal 4a via the IASA 3 and aGW 2a. After verification is complete, the mobile terminal 4a sends an INVITE message to the CSCF 8, 18. The aGW 2a on the calling side interprets/relays the INVITE message. The INVITE message normally comprises contents as illustrated in Table 1.

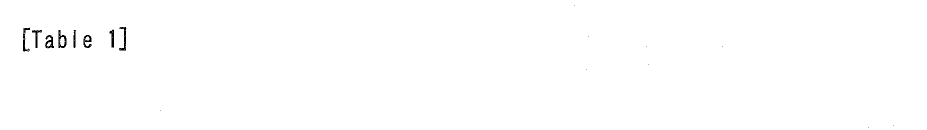

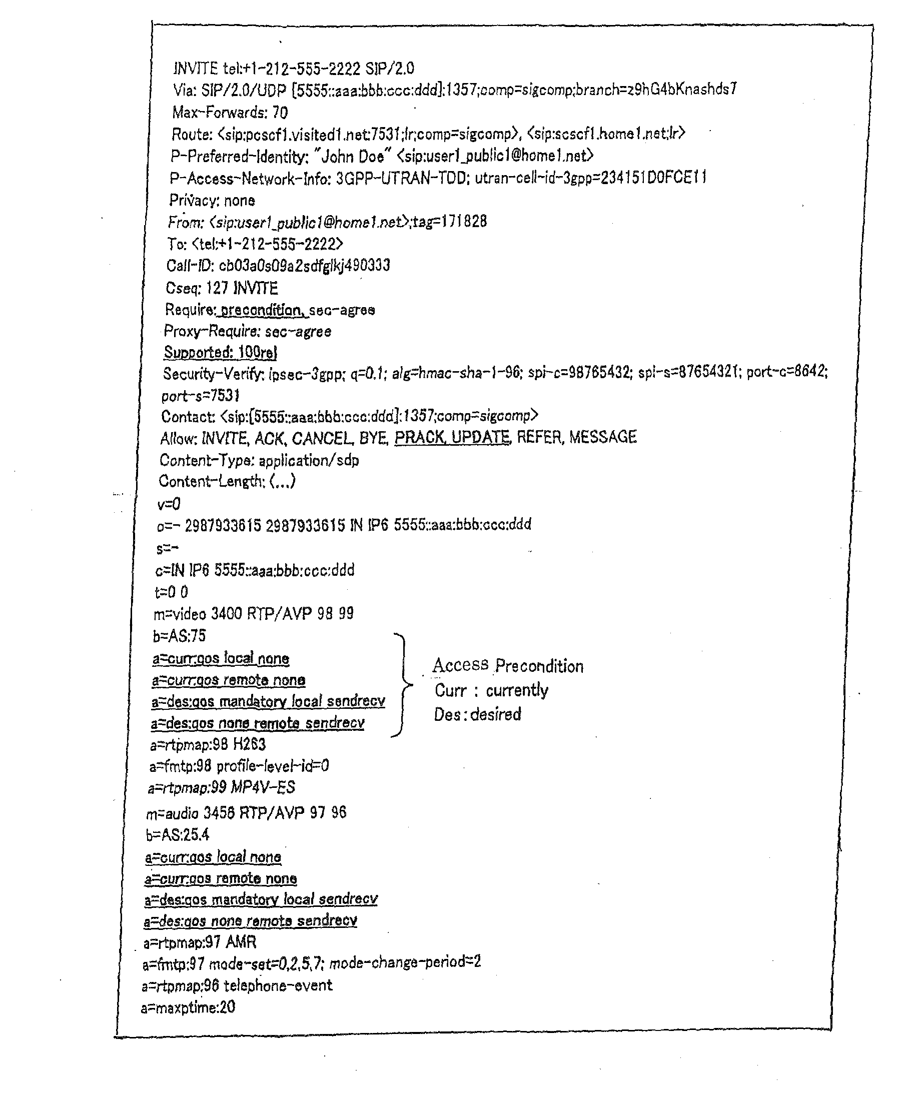

In the INVITE message, the "Require: precondition" is an instruction which instructs to follow the QoS precondition in the INVITE message during bearer setting.
Moreover
"a=curr.qos local none
a=curr.qos remote none
a=des.qos mandatory local sendrecv
a=des.qos mandatory remote sendrecv"
specifies the QoS preconditions. In the INVITE massage there are two QoS preconditions, where the first QoS precondition is related to video and means that the QoS is not currently set for the local terminal or remote terminal, however, there is a desire for bi-directional communication; and the second QoS precondition is related to audio and means that the QoS is not currently set for the local terminal or remote terminal, however, there is a desire for bi-directional communication.
"Supported:100rel" indicates that a confirmation response is necessary, and "Allow: INVITE, ACK, CANCEL, BYE, PRACK, UPDATE, REFER, MESSAGE" are SIP messages that the mobile terminal 4a uses.

A normal IMS mobile terminal generates the INVITE message illustrated in Table 1, however, the INVITE message that is generated by a mobile terminal 4a that is mounted with improved SIP for Evolved 3GPP does not include the underlined messages in Table 1. That "precondition" is not included in the INVITE message means that the mobile terminal 4a does not specify any QoS preconditions; that "Supported:100rel" is not included in the INVITE message means that the mobile terminal 4a does not require a confirmation response; and that PRACK and UPDATE are not included means that the mobile terminal does not use PRACK and UPDATE.
Therefore, when performing the following bearer setting, the aGW 2a performs the bearer setting based on pre-registered terminal information and subscriber information rather than making reference to preconditions in the INVITE message. Moreover, the aGW 2a issues a PRACK and UPDATE in place of the mobile terminal 4a without sending a confirmation response to the mobile terminal 4a.

Returning to FIG. 5, the aGW 2a sends the received INVITE message to the CSCF 8, then the CSCF 8 returns a 100 Trying message to the mobile terminal 4a via the aGW 2a that indicates that the INVITE message was received. Moreover, the CSCF 8 sends an INVITE message to the mobile terminal 14a on the called side, however, when there is no connection between the mobile terminal on the called side and the aGW 12a, the aGW 12a will perform paging all together. If the mobile terminal 14a on the called side responds to this paging, RCC connection, verification and ciphering processing similar to that performed on the calling side is performed, and after verification is complete, the aGW 12a sends an INVITE message to the mobile terminal 14a. After receiving the INVITE message, the mobile terminal 14a returns a 100 Trying message indicating that the message was received, as well as sends a 183 Session Progress message to the CSCF 8, 18 indicating the progress of the session. The aGW 12a on the calling side interprets/relays the 183 Session Progress message. The 183 Session Progress message comprises the contents illustrated in Table 2.

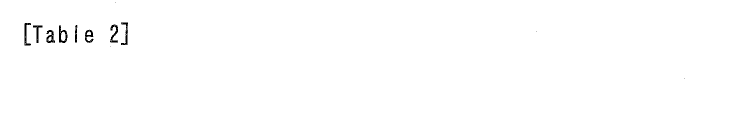

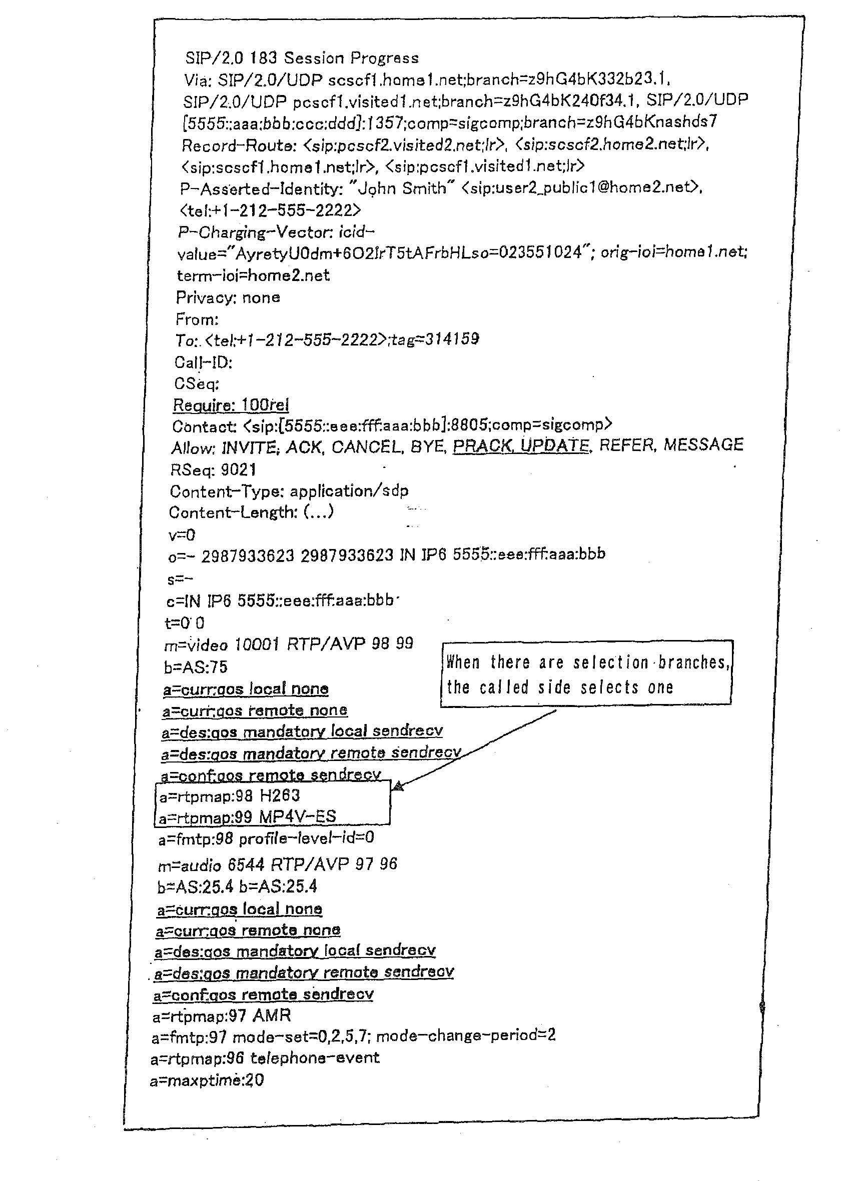

In the 183 Session Progress message, "Require:100rel" indicates that a confirmation response is necessary, and "Allow: INVITE, ACK, CANCEL, BYE, PRACK, UPDATE, REFER, MESSAGE" are SIP message that the mobile terminal 14a can use. Furthermore,
"a=curr.qos local none
a=curr.qos remote none
a=des.qos mandatory local sendrecv
a=des.qos mandatory remote sendrecv"
specifies the QoS preconditions. In the 183 Session Progress message there are two QoS preconditions, where the first QoS precondition is related to video and means that the QoS is not currently set for the local terminal or remote terminal, however, there is a desire for bi-directional communication; and the second QoS precondition is related to audio and means that the QoS is not currently set for the local terminal or remote terminal, however, there is a desire for bi-directional communication.

A normal IMS mobile terminal generates a 183 Session Progress message as illustrated in Table 1, however, the 183 Session Progress message that is generated by the mobile terminal 14a that is mounted with improved SIP for Evolved 3GPP does not included the underlined messages in Table 2. That "Require: 100rel" is not included in 183 Session Progress message means that the mobile terminal 14a does not require a confirmation response; that PRACK and UPDATE are not included means that the mobile terminal 14a does not use PRACK and UPDATE; and that QoS preconditions are not included means that the mobile terminal 14a does not specify QoS preconditions in the 183 Session Progress message.
Therefore, when performing the following bearer setting, the aGW 12a performs the bearer setting based on pre-registered terminal information and subscriber information without making reference to preconditions in the 183 Session Progress message. Moreover, the aGW 12a issues PRACK and UPDATE in place of the mobile terminal 14a without sending a confirmation response to the mobile terminal 14a.

Returning to FIG. 5, the aGW 12a sends the received 183 Session Progress message to the CSCF 8,18, and the CSCF 8, 18 notify the mobile terminal 4a on the calling side of the 183 Session Progress via the aGW 2a on the calling side. When do i ng th i s, the aGW 2a sends the confirmation response PRACK in place of the mobile terminal 4a to the aGW 12a on the called side via the CSCF 8, 18. After receiving the PRACK, the aGW 12a on the called side notifies the aGW 2a on the calling side of confirmation response in place of the mobile terminal 14a with a 200 OK via the CSCF 8, 18. In this case, the aGW 2a on the calling side does not send confirmation response 200 OK to the mobile terminal 4a on the calling side.
After receiving the 200 OK, the AF of the CSCF 8, 18 decides the necessary information for bearer settings of the terminals 4a, 14a based on pre-registered terminal information and subscriber information, then transfers that information to the PCRF/PCEF 7, 17, after which each of the PCRF/PCEF 7, 17 performs bearer settings between each of the aGW 2a on the calling side and the aGW 12a on the called side, and each of the aGW 2a on the calling side and each of the aGW 12a on the called side performs bearer settings between each of the mobile terminals 4a, 14a.
After the bearer settings are completed, the aGW 2a on the calling side sends an UPDATE in place of the mobile terminal 4a on the calling side to the aGW 12a on the called side via the CSCF 8, 18. After receiving the UPDATE, the aGW 12a on the called side does not send that UPDATE to the mobile terminal 14a on the called side. Thereafter, in a case where the bearer setting with the mobile terminal 14a is completed, the aGW 12a on the called side sends a 200 OK message in place of that mobile terminal 14a to the aGW 2a on the calling side via the CSCF 8, 18. Even though the aGW 2a on the calling side receives the 200 OK message, it does not send the message to the mobile terminal 4a.

When the bearer setting is completed the mobile terminal 14a on the called side generates a call sound and sends a Ringing message to the mobile terminal 4a on the calling side via the aGW 12a on the called side, CSCF 8, 18 and aGW 2a on the calling side. After the aGW 2a on the calling side sends a Ringing message to the mobile terminal 4a on the calling side, it sends a PRACK in place of the mobile terminal 4a to the aGW 12a on the called side via the CSCF 8, 18, and even though the aGW 12a on the called side receives the PRACK, the aGW 12a on the called side immediately sends a 200 OK in place of the mobile terminal 14a without sending the PRACK to the mobile terminal 14a on the called side.
In this state, when the user of the mobile terminal 14a on the called side lifts up the receiver (Off Hook), the mobile terminal 14a on the called side sends a 200 OK (INVITE) to the mobile terminal 4a on the calling side via the aGW 12a on the called side, CSCF 8, 18 and aGW 2a on the calling side, and after receiving the 200 OK (INVITE), the mobile terminal 4a on the calling side returns an ACK to the mobile terminal 14a in the called side. This makes communication between both mobile terminals 4a, 14a possible.
With this first embodiment, the number of messages during call connection in the radio communication zone on the calling side is reduced in half from 12 to 6, and the number of messages during call connection in the radio communication zone on the receiving side is also reduced in half from 12 to 6. Since it is possible to reduce the amount of signaling in the radio communication zone in this way, high-speed communication becomes possible as well as a large number of simultaneous call connections.

### (c) Variation of the Call Connection Sequence of the First Embodiment

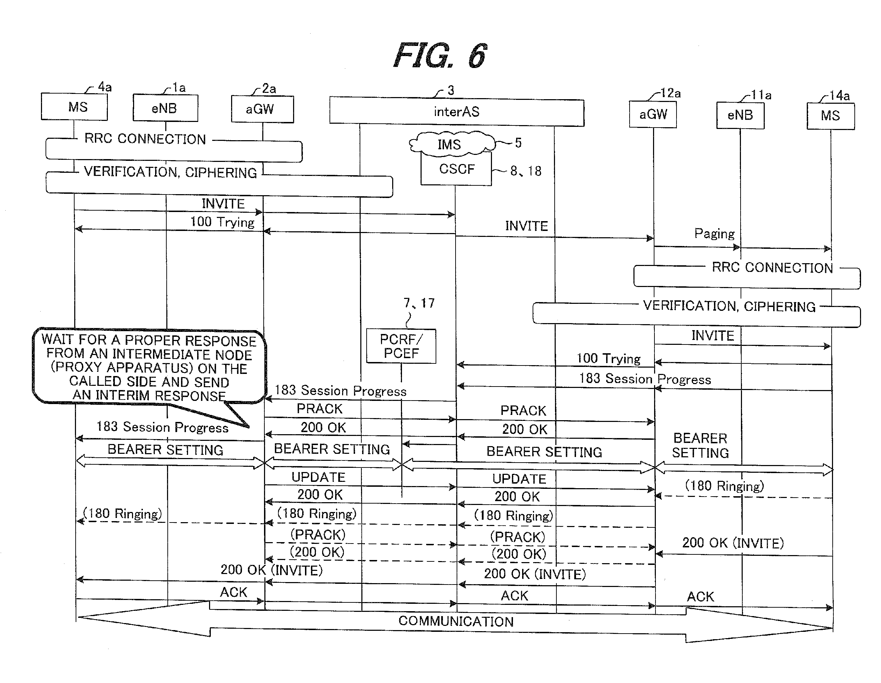

FIG. 6 is a drawing for explaining a variation of the call connection sequence of the first embodiment. In the first embodiment illustrated in FIG. 5, after the aGW 2a on the calling side receives the 183 Session Progress message, it immediately sends that message to the mobile terminal 4a on the calling side, however, in the variation illustrated in FIG. 6, after the aGW 2a on the calling side receives a 200 OK, it sends the 183 Session Progress message to the mobile terminal 4a on the calling side.
There may be cases where, depending on the terminal information or subscriber information of the mobile terminal 14a on the called side, it is not possible to properly select the media or QoS desired by the mobile terminal 4a on the calling side. In that case, the aGW 12a on the called side or the CSCF 8, 18 does not send a 200 OK, but sends NG to indicate an error has occurred. Therefore, after receiving a 200 OK, the aGW 2a on the calling side sends a 183 Session Progress message to the mobile terminal 4a on the calling side, and when an NG is received, notifies the mobile terminal 4a on the calling side that an error occurred. By doing this, it is possible to send a 183 Session Progress response to a terminal after confirming that the media or QoS could be selected properly. Moreover, even though it is not possible to properly select the media or QoS and some kind of error occurs, it is possible for the mobile terminal 4a on the calling side to receive the error message before receiving the 183 Session Progress message. Thereby, it is possible to make the order of messages received by the mobile terminal 4a identical with the order of messages received by the mobile terminal 4a at the time of normal error generation.

### (d) Call Connection Sequence of a Second Embodiment that Shortens the Call Connection Time

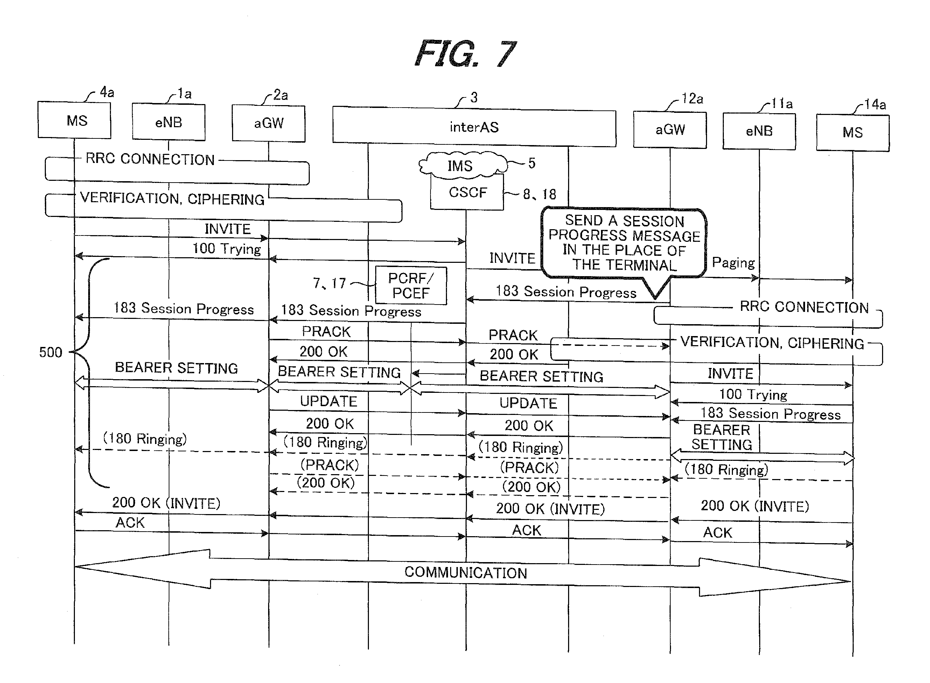

FIG. 7 is a drawing showing another call connection sequence when an IMS terminal 4a, which is mounted with SIP that has been improved for Evolved 3GPP, originates a call, where it is capable of shortening the call connection time.
This sequence differs from the call connection sequence illustrated in FIG. 5 in that:
(1) the aGW 12a on the called side issues a 183 Sess i on Progress message while connection control (RCC connection, verification processing, etc.) is being performed between the aGW 12a on the called side and the mobile terminal 14a on the called side due to paging;
(2) after that, regardless of the mobile terminal 14a on the called side, the calling side performs the call connection process 500 up to the 200 OK (INVITE) that indicates that connection is completed and communication starts; and
(3) after the connection between the aGW 12a in the called side and the mobile terminal 14a on the called side is completed, the call connection sequence is performed up to the 200 OK (INVITE) independently between the aGW 12a on the called side and mobile terminal 14a on the called side.
When the user of the mobile terminal 14a on the called side picks up the receiver, for example, after the mobi le terminal 14a on the called side sends Ringing (Off Hook), the mobile terminal 14a on the called side sends a 200 OK (INVITE) to the mobile terminal 4a on the calling side via the aGW 12a on the called side, CSCF 8, 18 and aGW 2a on the calling side, and after receiving the 200 OK (INVITE), the mobile terminal 4a on the calling side returns an ACK to the mobile terminal 14a on the called side. From this, communication between both mobile terminals 4a, 14a becomes possible.
With this second embodiment of the invention, the call connection sequence is performed by the calling side up to the 200 OK (INVITE) before the connection control between the aGW 12a on the called side and the mobile terminal 14a on the called side is completed. Thereby, it is possible to shorten the call connection time.

### (e) Variation of the Call Connection Sequence of the Second Embodiment

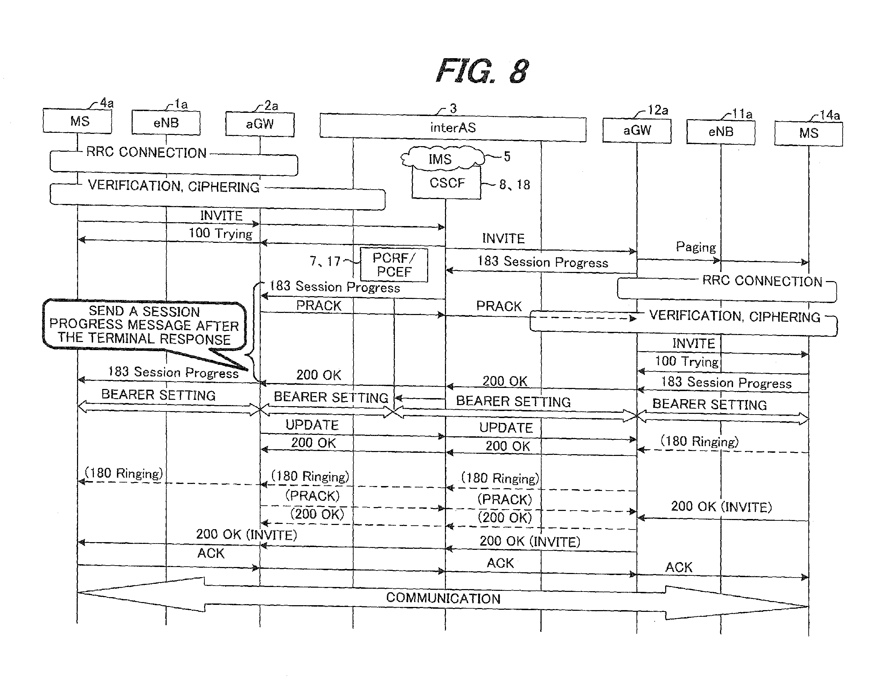

FIG. 8 is a drawing for explaining a variation of the call connection sequence of the second embodiment. In the second embodiment illustrated in FIG. 7, after receiving a 183 Session Progress message, the aGW 2a on the calling side immediately sends that message to the mobile terminal 4a on the calling side, however, in the variation illustrated in FIG. 8, the aGW 2a on the calling side sends the 183 Session Progress message to the mobile terminal 4a on the calling side after receiving a 200 OK.
There may be cases in which, depending on the terminal information or subscriber information of the mobile terminal 14a on the called side, it may not be possible to properly select the media or QoS desired by the mobile terminal 4a on the calling side. In that case, neither the aGW 12a on the called side nor the CSCF 8, 18 output a 200 OK, but output an NG and an error occurs. Therefore, the aGW 2a on the calling side sends a 183 Session Progress message to the mobile terminal 4a on the calling side after confirming that the media or QoS could be properly selected. Moreover, even when it is not possible to properly select the media or QoS and an error occurs, the mobile terminal 4a on the calling side can receive an error message before receiving the 183 Session Progress message. Thereby it is possible to make the order of messages received by the mobile terminal 4a identical with the order of messages received by the mobile terminal 4a at the time of normal error generation.

### (C-2) Call Connection Sequence for a Normal IMS Terminal

(a) Registration Sequence
   The registration procedure for a normal IMS terminal 4a that is not mounted with improved SIP for Evolved 3GPP is the same as for the conventional example illustrated in FIG. 19.
(b) First Embodiment of the Call Connection Sequence for a Normal IMS Terminal
   FIG. 9 is a drawing for explaining the call connection sequence when a normal IMS terminal 4a, which is not mounted with SIP that has been improved for Evolved 3GPP, originates a call.
   When the mobile terminal 4a originates a call, that mobile terminal and the eNB 11a are connected by RRC (Radio Resource Control), after which the mobile terminal and aGW are connected by Attach, and the aGW is notified of the unique number (terminal ID) of the mobile terminal. After RRC connection is completed, the HSS 6 performs verification of the mobile terminal 4a via the IASA 3 and aGW 2a. After the verification process is completed, the mobile terminal 4a sends an INVITE message to the CSCF 8, 18. The INVITE message that is sent by a normal IMS mobile terminal 4a comprises contents as illustrated in Table 1.
   The aGW 2a on the calling side interprets and relays the INVITE message and sends it to the CSCF 8, 18, after which the CSCF 8, 18 returns a 100 Trying message to the mobile terminal 4a indicating that the INVITE message was received. Moreover, the CSCF 8, 18 sends the INVITE message to the mobile terminal 14a on the cal led side, however, when the mobi le terminal on the called side is not connected wi th the aGW, the aGW 12a performs paging all together. When the mobile terminal 14a on the called side responds to this paging, RRC connection, verification and privacy processing are performed as on the calling side, and after verification is complete, the aGW 12a on the called side sends an INVITE to the mobile terminal 14a on the called side. After receiving the INVITE message, the mobile terminal 14a returns a 100 Trying message that indicates that the message was received, and sends a 183 Session Progress message that indicates the status of the session progress to the CSCF 8, 18. The 183 Session Progress message comprises the contents illustrated in Table 2.

The aGW 12a on the called side relays and interprets the 183 Session Progress message, and sends it to the CSCF 8, 18, after which the CSCF 8, 18 sends the 183 Session Progress message to the mobile terminal 4a on the calling side. After receiving the 183 Session Progress message, the aGW 2a on the calling side deletes items from the 183 Session Progress message that are related to a reliability response, and notifies the mobile terminal 4a on the calling side of the 183 Sess i on Progress message. The items that are related to a reliability response are "Require:100rel" and "PRACK". By doing this, the mobile terminal 4a on the calling side does not send a PRACK even though the 183 Session Progress message is received.
After sending the 183 Session Progress message to the mobile terminal 4a on the calling side, the aGW 2a on the calling side, in place of the mobile terminal 4a on the calling side, sends a PRACK, which is a confirmation response to the 183 Session Progress message, to the mobile terminal 14a on the called side via the CSCF 8, 18 and the aGW 12a on the called side. After receiving the PRACK, the mobile terminal 14a on the called side sends a 200 OK message to the aGW 2a on the calling side via the CSCF 8, 18. Even though the aGW 2a on the calling side receives the 200 OK message, it does not send the 200 OK message to the mobile terminal 4a on the calling side.
After finishing the processing described above, the AF of the CSCF 8, 18 makes reference to the QoS information and contract information for each mobile terminal in the INVITE message and 183 Session Progress message, then gives information that is necessary for the bearer setting to the PCRF/PCEF 7, 17, after which each of the PCRF/PCEF 7, 17 performs the bearer setting between each of the aGW 2a on the calling side and the aGW 12a on the called side, and, each aGW 2a, 12a performs the bearer setting between each of the mobile terminals 4a, 14a.

When the mobile terminal 4a on the calling side is updated based on the bearer setting, it sends an UPDATE to the mobile terminal 14a on the called side via the aGW 2a on the calling side, the CSCF 8, 18, and aGW 12a on the called side. Also, thereafter, when update of the mobile terminal 14a on the called side has been completed based on the bearer setting, it sends a 200 OK message to the mobile terminal 4a on the calling side via the aGW 12a on called side, CSCF 8, 18 and aGW 2a on the calling side, as well as sends a call sound generation message (Ringing).
After receiving the Ringing message, the aGW 2a on the calling side deletes the items from the Ringing message that are related to a reliability response and notifies the mobile terminal 4a on the calling side. By doing this, the mobile terminal 4a on the calling side does not send a PRACK even though a Ringing message has been received.
After sending the Ringing message to the mobile terminal 4a on the calling side, the aGW 2a on the calling side, in place of the mobile terminal 4a on the calling side, sends a PRACK, which is a confirmation response, to the mobile terminal 14a on the called side via the CSCF 8, 18 and aGW 12a on the called side. When the mobile terminal 14a on the called side receives the PRACK, it sends a 200 OK message to the mobile terminal 4a on the calling side via the CSCF 8, 18. Even though the aGW 2a on the calling side receives the 200 OK message, it does not send that 200 OK message to the mobile terminal 4a on the calling side.
In this state, when the user of the mobile terminal 14a on the called side picks up the receiver, for example (Off Hook), the mobile terminal 14a on the called side sends a 200 OK (INVITE) to the mobile terminal 4a on the calling side via the CSCF 8, 18, and the mobile terminal 4a on the calling side returns an ACK to the mobile terminal 14a on the called side after receiving the 200 OK (INVITE), Thereby communication becomes possible between both mobile terminals 4a, 14a.
With this first embodiment, the number of messages sent during call connection in the radio communication zone on the calling side is reduced from 12 to 8. Since it is possible to reduce the amount of signaling in the radio communication zone in this way, high-speed communication becomes possible even with a normal IMS terminal, and a larger number of simultaneous call connections become possible.

### (c) Variation of the Call Connection Sequence of the First Embodiment

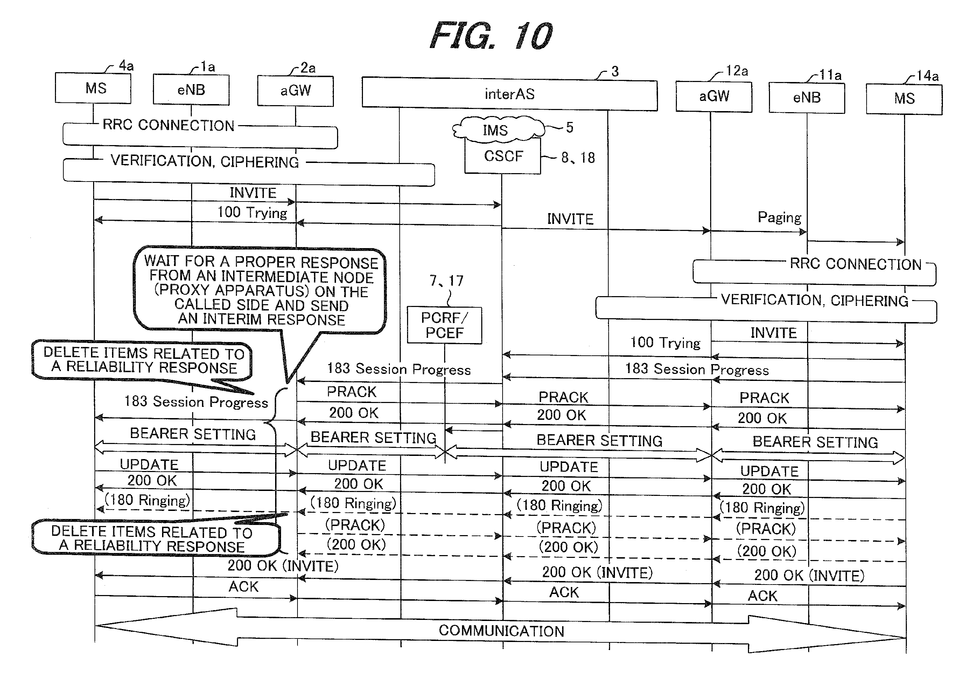

FIG. 10 is a drawing for explaining a variation of the call connection sequence of the first embodiment. In the first embodiment illustrated in FIG. 9, after the aGW 2a on the calling side receives a 183 Session Progress message, it immediately sends that message to the mobile terminal 4a on the calling side, however, in the variation illustrated in FIG. 10, the aGW 2a sends the 183 Session Progress message to the mobile terminal on the calling side 4a after receiving a 200 OK.
There may be cases, depending on the terminal information or subscriber information of the mobile terminal 14a on the called side, in which it is not possible to properly select the media or QoS desired by the mobile terminal 4a on the calling side. In that case, the aGW 12a on the called side and CSCF 8, 18 do not send a 200 OK, but output an NG and an error occurs. Therefore, the aGW 2a on the calling side sends the 183 Session Progress message to the mobile terminal 4a on the calling side after receiving a 200 OK, and when a NG is received, notifies the mobile terminal 4a on the calling side. By doing so, it is possible to send a 183 Session Progress response to a terminal after confirming that the media or QoS could be properly selected. Moreover, even though it is not possible to properly select the media or QoS and various errors occur, as seen from the mobile terminal 4a on the calling side can receive an error message before receiving the 183 Session Progress message. Thereby it is possible to make the order of messages received by the mobile terminal 4a identical with the order of messages received by the mobile terminal 4a at the time of normal error generation.

### (d) Call Connection Sequence of a Second Embodiment that Shortens the Call Connection Time.

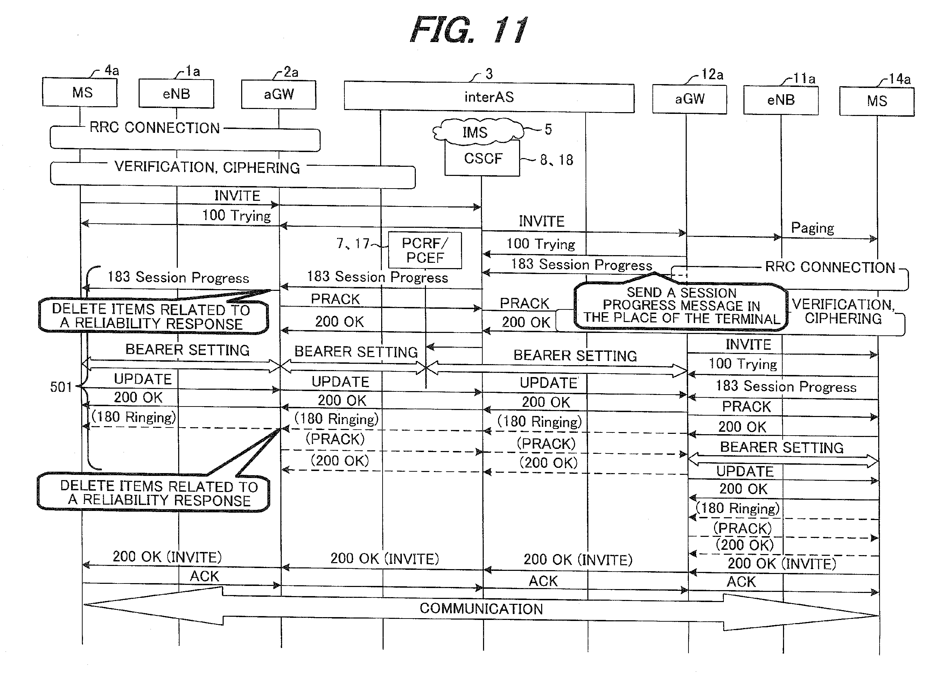

FIG. 11 is a drawing showing another call connection sequence when a normal IMS terminal 4a originates a call, where it is capable of shortening the call connection time.
This sequence differs from the call connection sequence illustrated in FIG. 9 in that:
(1) the aGW 12a on the called side issues a 183 Sess i on Progress message in place of the mobile terminal 14a while performing connection control (RRC connection, verification processing, etc.) between the aGW 12a on the called side and the mobile terminal 14a on the called side in response to paging;
(2) after that, regardless of the mobile terminal 14a on the called side, the call connection sequence process 501 is performed by the calling side up to a 200 OK that indicates that connection is completed and communication starts; and
(3) after connection between the aGW 12a on the called side and the mobile terminal 14a on the called side is completed, the call connection sequence process is performed independently between the aGW 12a on the called side and the mobile terminal 14a on the called side unti generation of a 200 OK (INVITE).
After the mobile terminal 14a on the cal led side sends Ringing, when the user of the mobile terminal 14a on the called side picks up the receiver for example (Off Hook), the mobile terminal 14a on the called side sends a 200 OK (INVITE) to the mobile terminal 4a on the calling side via the aGW 12a on the called side, the CSCF 8, 18, and aGW 2a on the calling side, after which the mobile terminal 4a on the calling side returns an ACK of receiving the 200 OK (INVITE) to the mobile terminal 14a on the called side. This makes communication between both mobile terminals 4a, 14a possible.
With this second embodiment, since the call connection sequence process is performed by the calling side up to the 200 OK (INVITE) before connection control between the aGW 12a on the called side and the mobile terminal 14a on the cal led side is complete, it becomes possible to perform the call connection process in a short time.

### (e) Variation of the Call Connection Sequence of the Second Embodiment

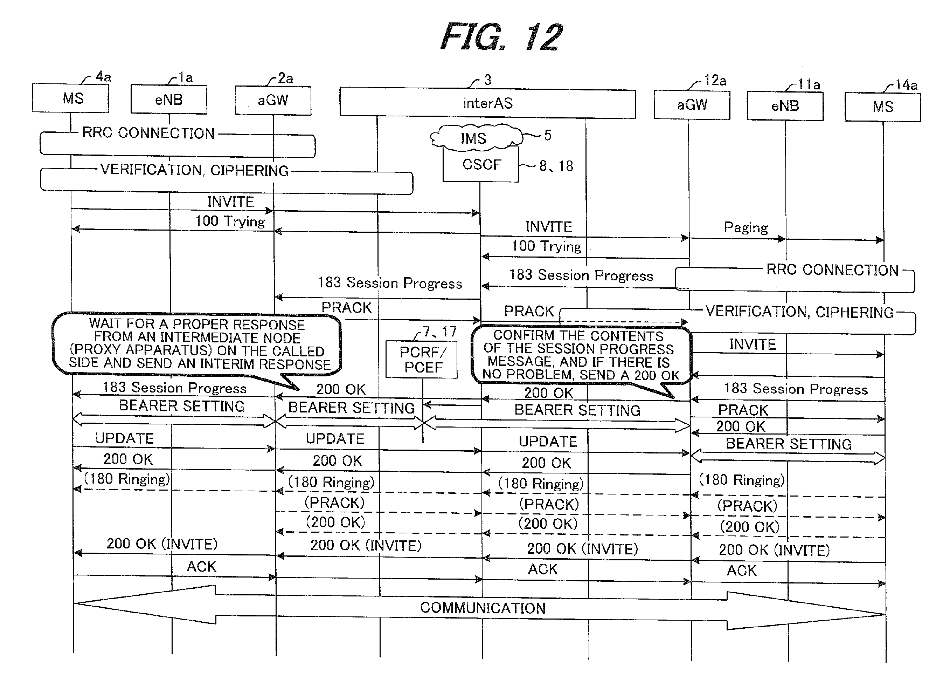

FIG. 12 is a drawing for explaining a variation of the call connection sequence of the second embodiment. In the second embodiment illustrated in FIG. 11, after receiving the 183 Session Progress message, the aGW 2a on the calling side immediately sends that message to the mobile terminal 4a on the calling side, however, in the variation illustrated in FIG. 12, the aGW 2a on the calling side sends the 183 Session Progress message to the mobile terminal 4a on the calling side after receiving the 200 OK,
There may be cases where, depending on the terminal information or subscriber information of the mobile terminal 14a on the called side, it is not possible to properly select the media or QoS desired by the mobile terminal 4a on the calling side. In that case, the CSCF 8, 18 does not send a 200 OK, but sends NG to indicate an error has occurred. Therefore, the aGW 2a on the calling side sends the 183 Session Progress message to the mobile terminal 4a on the calling side after receiving the 200 OK, and when a NG is received, notifies the mobile terminal 4a on the calling side that there is an error. The mobile terminal 4a on the calling side does not receive the 183 Session Progress message, and due to the error notification, immediately ends call connection.

### (D) Processing Sequence When Out of Range or Busy

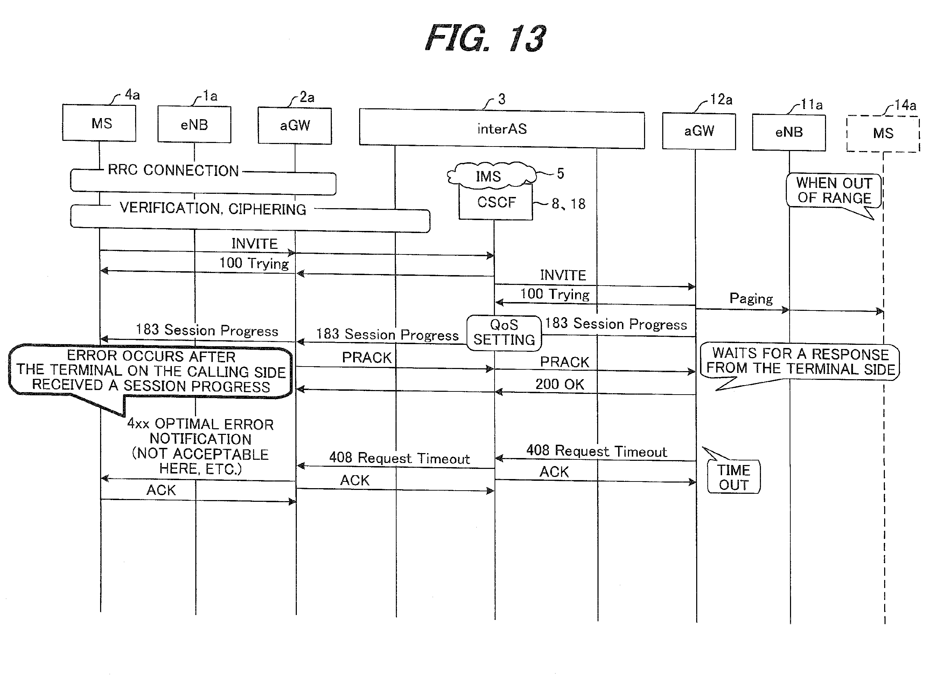

FIG. 13 to FIG. 16 are drawings showing the processing sequence in the call connection sequence for an IMS terminal that is mounted with SIP that has been improved for Evolved 3GPP (second embodiment illustrated in FIG. 7) in the case where the mobile terminal on the called side is out of range or busy.
FIG. 13 illustrates the processing sequence when, after a 183 Session Progress message has been sent to the mobile terminal 4a on the calling side, there is no response ending in a timeout because the mobile terminal 14a on the called side is out of range and the aGW 12a on the called side generates a 408 Request Timeout indicating an error occurred.

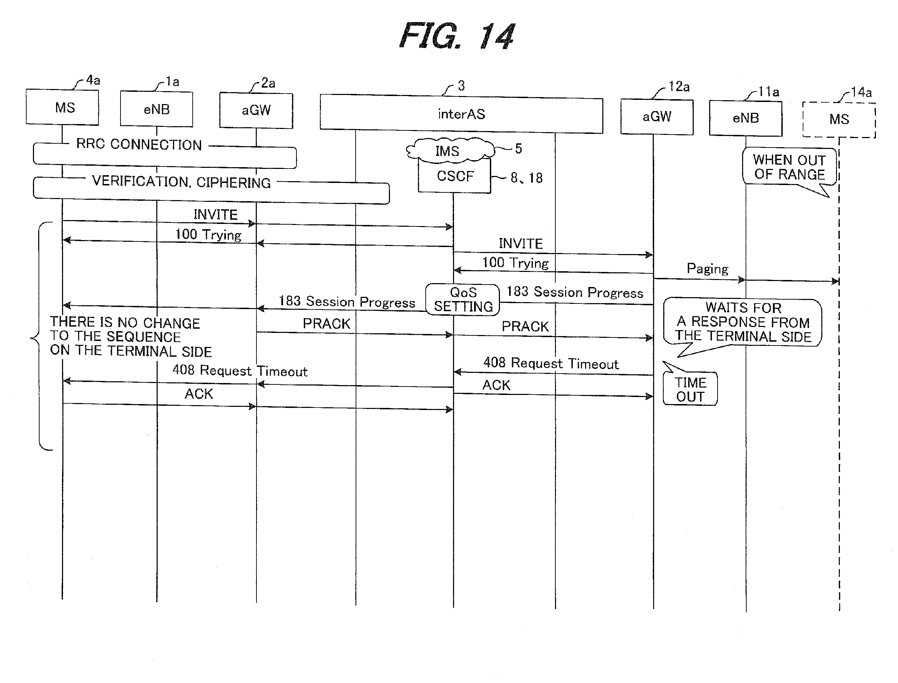

FIG. 14 illustrates the processing sequence when, before a 183 Session Progress message is sent to the mobile terminal 4a on the calling side, there is no response ending in a timeout because the mobile terminal 14a on the called side is out or range, and the aGW 12a on the called side generates a 408 Request Timeout indicating an error occurred.

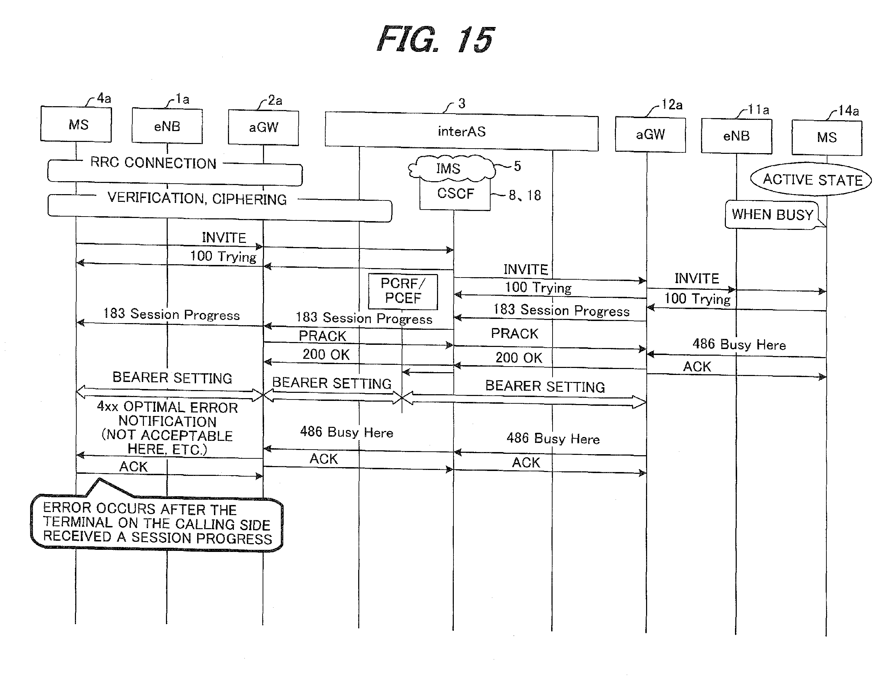

FIG. 15 illustrates the processing sequence when, after a 183 Session Progress message has been sent to the mobile terminal 4a on the calling side, the mobile terminal 14a on the called side is in a busy state, so the aGW 12a on the called side generates a 486 Busy Here indicating an error occurred.

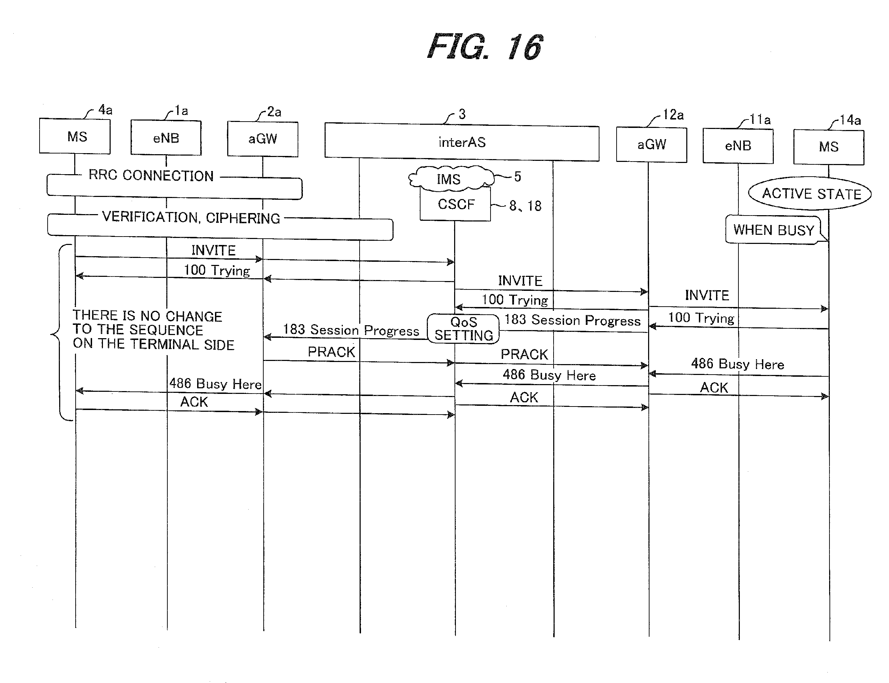

FIG. 16 illustrates the processing sequence when, before a 183 Session Progress message is sent to the mobile terminal 4a on the calling side, the mobile terminal 14a on the called side is in a busy state, so the aGW 12a on the called side generates a 486 Busy Here indicating an error occurred.

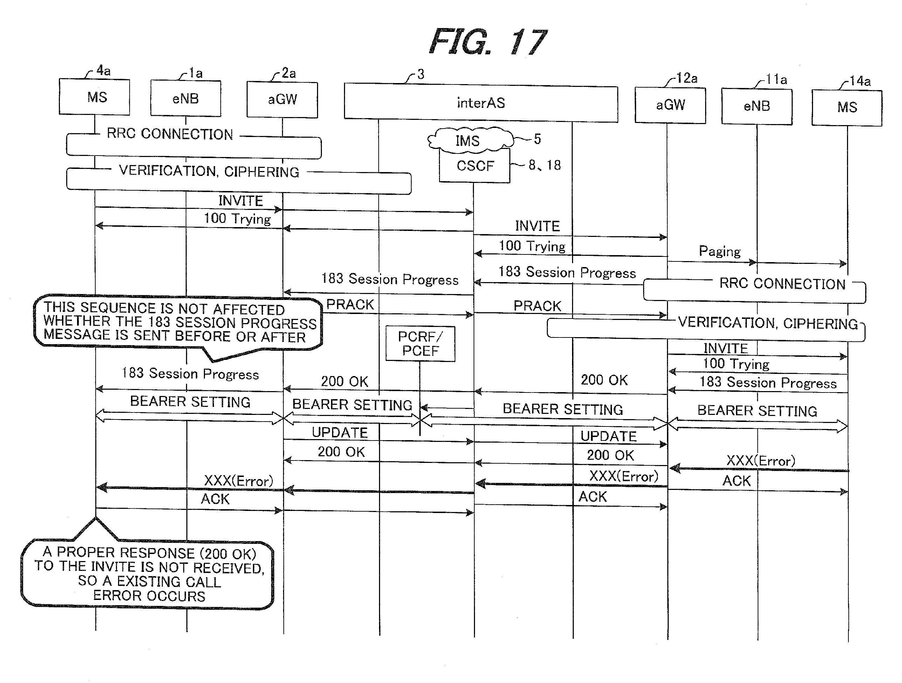

FIG. 17 is a drawing showing the processing sequence when an Error message XXX (error) is generated and an error occurs before a normal response 200 OK (INVITE) is generated for an INVITE. The mobile terminal 4a on the calling side does not receive the 200 OK (INVITE), so an error occurs when sending a normal call.

### - Effect of the Invention

With the invention described above, it is possible to reduce the amount of signaling in the radio communication zone while enjoying various services, and simultaneous communication over more links becomes possible. Moreover, by reducing the number of SIP messages that flow between ends, it is possible to shorten the call connection time, and thus radio communication resources can be more effectively used without occupying frequency bands.

## Claims

1. A call connection processing method that uses SIP(Session Invitation Protocol) to perform call connection between user terminals and a backbone network via an access network, comprising:
a first step of instructing a proxy apparatus in the access network from a user terminal to send specified SIP signaling messages to the backbone network in place of the user terminal;
a second step of following the instruction and not sending a certain SIP signaling message of the specified SIP signaling messages to the user terminal from the proxy apparatus during call connection, or sending another SIP signaling message to the backbone network from the proxy apparatus in place of the user terminal; and
a third step of transmitting and receiving messages other than the specified SIP signaling messages between the user terminal and backbone network.

2. The call connection processing method of claim 1, wherein the instruction of the first step is performed by declaring using an INVITE message of the SIP protocol that the user terminal (1) does not request a reliability response, and (2) does not specify preconditions for bearer setting,
in the second step, the proxy apparatus performs in place of the user terminal, transmission and reception of SIP signaling messages related to the reliability response, and transmission and reception of specified SIP messages after the bearer setting.

3. The call connection processing method of claim 2, further comprising a step of storing performance information and subscriber information for the user terminal in the proxy apparatus when registering the user terminal in the access network,
wherein the proxy apparatus performs the bearer setting using that stored information, and transmits the specified SIP signaling messages after that bearer setting in place of the user terminal.

4. The call connection processing method of claim 1, further comprising:
a step of notifying a user terminal that the proxy apparatus will perform transmission and reception of the specified SIP signaling messages in place of that user terminal when there was no instruction from the user terminal to perform transmission and reception of specified SIP signaling messages in place of the user terminal; and
a step of performing the transmission of the specified SIP signaling messages in place of the user terminal.

5. The call connection processing method of claim 4, wherein the specified SIP signaling messages are SIP signaling messages for confirmation response.

6. The call connection processing method of claim 1 or claim 4, further comprising:
a step of independently proceeding on the culling side with the call connection processing sequence until just before a user terminal on the called side responds with a 200 OK message to the INVITE message after a user terminal on the calling side sends an INVITE message of the SIP protocol, regardless of the connection status to the network of the user terminal on the called side; and
a step of performing communication between the user terminal on the calling side and the user terminal on the called side via the backbone network after the user terminal on the calling side receives the 200 OK message from the user terminal on the called side.

7. The call connection processing method of claim 6, further comprising a step of independently performing the call connection processing sequence on the called side until just before the user terminal on the called side responds with the 200 OK message.

8. The call connection processing method of claim 1 or claim 4, further comprising:
a step of the proxy apparatus receiving from the backbone network an SIP message that indicates the progress status of the call connection, refraining the transmission of that message to the user terminal, then sending that message to the user terminal after confirming that the selection of service contents and QoS has been properly completed.

9. A message transmission/reception proxy apparatus that is located in an access network configured to access a backbone network that performs a call connection process between user terminals using SIP (Signal Invitation Protocol) and that acts as a proxy for a user terminal during call connection to perform transmission/reception of SIP signaling messages with the backbone network, comprising:
a user information storage unit that acquires and stores performance information and subscriber information of user terminals;
a processing unit that performs a process of receiving and analyzing SIP signaling messages, a bearer setting process that uses the stored information, a relay process of relaying SIP signaling messages from and to a mobile terminal and base station, and a process of creating and sending SIP signaling messages in place of the mobile terminal;
a transmission/reception unit that performs transmission and reception of messages with the user terminal; and
a transmission/reception unit that performs transmission and reception of messages with the backbone network.
